# EUROPEAN PATENT APPLICATION

(11) **EP 4 681 813 A1**
(43) Date of publication of application: **21.01.2026**
(21) Application number: 25189856.5
(22) Date of filing: 16.07.2025
(51) Int. Cl.: B01J 20/289, B01J 20/32, B01D 15/22, B01D 15/20, G01N 30/56, G01N 30/60

(54) **HYDROPHILIC INTERACTION MICROFLUIDIC CHROMATOGRAPHY**

(30) Priority: 19.07.2024 US 202418778537
(71) Applicant: PharmaFluidics NV, 9052 Gent (BE)
(72) Inventor: DE DECKER, Jeroen, Dendermonde (BE)
(74) Representative: Boult Wade Tennant LLP

(57) **Abstract**

A microfluidic chromatography column comprising a stationary phase substrate and a method for functionalizing the chromatography column. The stationary phase substrate has a liquid channel defined by channel walls, and the channel has an inlet and an outlet. There are pillars positioned in the channel on the substrate. The stationary phase substrate of the chromatography column can comprise silicon oxide. At least a portion of the surface of the stationary phase substrate can be attached to a linker, and the linker is attached to a polymer.

## Description

### TECHNICAL FIELD

The present disclosure relates to the field of liquid chromatography and to the field of microfluidics.

### BACKGROUND

Microfluidic high pressure liquid chromatography (HPLC) columns provide high resolution separation and analysis with a very small sample size. Microfluidic columns have been prepared with a stationary phase containing hydrophobic organosilane chemistry which is useful for reversed phase (RP) chromatography. While reversed phase chromatography is useful for separating some analytes, it would be beneficial to have alternatives in order to increase the applicability of HPLC devices to other analytes.

### SUMMARY

In meeting the long-felt needs in the field, provided is a microfluidic chromatography column comprising a stationary phase substrate. The stationary phase substrate has a liquid channel defined by channel walls, and the channel has an inlet and an outlet. There are pillars positioned in the channel on the substrate. The stationary phase substrate of the chromatography column can comprise silicon oxide. At least a portion of the surface of the stationary phase substrate is attached to a linker, and the linker is attached to a polymer.

Also provided is a method of functionalizing a chromatography column, comprising placing a linker and forming a polymer. The linker placement comprises flowing a first mixture comprising an acrylate silane, an acid catalyst, and a first solvent through the column so as to place a pre-linker on the stationary phase substrate of the chromatography column. The polymer formation comprises flowing a second mixture comprising a monomer, a second solvent, and a radical initiator through the chromatography column under conditions sufficient to react the monomer with the pre-linker to form a polymer attached to a linker.

Benefits of this process are an improved performance for columns produced by this method in separating mixtures and, in particular, mixtures including polar molecules, as compared with conventional unfunctionalized columns. The separation of mixtures such as mixtures including polar molecules on these functionalized columns is improved as compared to conventional reversed-phase columns or unfunctionalized silica.

### BRIEF DESCRIPTION OF THE FIGURES

The accompanying drawings, which are incorporated in and constitute a part of this specification, illustrate embodiments, and together with the general description given above, and the detailed description of the embodiments given below, serve to explain the principles of the present disclosure.
FIG. 1 is a chromatographic trace showing different retention times for uridine (3) and 2'-deoxyuridine (2) with toluene (1) as a void marker on an unfunctionalized column compared to a functionalized column.
FIG. 2 is a chromatographic trace showing different retention times for uridine (3) and 5-methyluridine (2) with toluene (1) as a void marker on an unfunctionalized column compared to a functionalized column.
FIG. 3 is a chromatographic trace showing different retention times for sodium p-toluenesulfonate (2) and uracil (3) with toluene (1) as a void marker on an unfunctionalized column compared to a functionalized column.
FIG. 4 is a chromatographic trace showing different retention times for trimethylphenyl ammonium chloride (TMPAC) (3) and uracil (2) with toluene (1) as a void marker on an unfunctionalized column compared to a functionalized column.
FIG. 5 is a chromatographic trace showing different retention times for theophylline (Tp) (2) and theobromine (Tb) (3) with toluene (1) as a void marker on an unfunctionalized column compared to a functionalized column.
FIG. 6 is a schematic of the solvents and reagents used in an embodiment of the linker placement step.
FIG. 7 is a schematic of the solvents and reagents used in an embodiment of the polymer formation step.

### DETAILED DESCRIPTION

Chromatography columns and methods for their production as taught herein provide a neutral, hydrophilic, polymeric stationary phase suitable for use in hydrophilic interaction chromatography (HILIC). Exemplary columns taught herein employ a microfluidic channel wherein the stationary phase includes microfabricated structural features such as pillars that is suitable for low flow (e.g., nano-flow) using very small volume samples. Conventional HILIC columns have used capillary flow (typical flow of 1-10 µL/minute) and higher flow rates and are not suitable for nano-flow liquid chromatography applications (typical flow below 1000 nL/min). These columns are also typically produced by batch processing of the stationary phase (such as beads) followed by packing of the beads into a sheath or tube. Such conventional production techniques are not suitable for microfabricated flow channels (created using, for example, lithographic processes) because the stationary phase is defined directly within the flow channel and cannot be treated separately and packed. Chromatography columns and methods of their production as taught herein overcome these issues by utilizing a twostep, in-situ, flow-through deposition process to functionalize the microfabricated structural features in a controlled manner to prevent clogging or subsequent non-uniform flow characteristics.

Described herein is, inter alia, a microfluidic chromatography column comprising a stationary phase substrate having a liquid channel defined by channel walls, the channel having an inlet and an outlet. Pillars can be present in the channel on the substrate. Examples of devices appropriate for use as chromatographic columns in embodiments taught herein are described in, for example, U.S. Patent Application Publication No. 2016/0001199, International Patent Application Publication No. WO2022190056. In some embodiments, the stationary phase substrate of the chromatography column comprises silicon oxide.

At least a portion of the surface of the stationary phase substrate can be attached to a linker, and the linker can be attached to a polymer. Without being bound to any particular theory or embodiment, the polymer allows the microfluidic chromatography column to be used for hydrophilic interaction chromatography. It should be understood, however, that although hydrophilic interaction chromatography is mentioned as an example application, the disclosed microfluidic chromatography columns can be used for other forms of chromatography based on the polymer.

As mentioned, microfabricated structural features such as pillar structures can be positioned in the liquid channel. In some embodiments, the microfabricated structural features can include a conductive or semi-conductive material such as silicon and can be generated using micro- or nano-fabrication techniques known to one of ordinary skill in the art including, for example, using photo- or electron-beam lithography and deep reactive ion etching. As such, the microfabricated structural features of some examples can be integral with the liquid channel, e.g., immovable or fixed with respect to the liquid channel. In some embodiments, stationary phase elements can be added in a manufacturing step subsequent to formation of the liquid channel (such as with packed bed columns). The microfabricated structural features (such as pillars) can form the stationary phase of the chromatographic column in some examples. In some embodiments, the pillars can be positioned in a regular pattern, though this is not a requirement, as pillars can be arranged in an irregular or asymmetric pattern. For example, pillars can be arranged in a first pattern along a first portion of a channel and arranged in a second pattern along a second portion of a channel.

In some embodiments, the silicon stationary phase substrate can be porous. Porosity can be created by, for example, electrochemically anodizing the substrate. After anodizing, the substrate can undergo a thermal treatment to obtain a silicon oxide surface layer over the complete substrate and its pillar structures, allowing the generation of reactive silanol groups on at least a part of the substrate and/or pillar structures, the thermal treatment being carried out at a temperature, with a duration and in an atmosphere such that any silicon oxide layer formed has a thickness of at least 10 nm such as, for example, in a range from 10 nm to 20 nm or in a range from 10 nm to 30 nm.. Non-limiting examples of creating a stationary phase substrate including microfabricated structural features (such as pillars) are found in U.S. Patent No. 11,491,458, International Patent Application Publication No. WO 2022/144786, and International Patent Application Publication No. WO2022190056.

The pillars can be a variety of shapes and extend from the bottom of the liquid channel to the top. Pillars can have a variety of cross-sectional shapes, for example, round (for cylindrical pillars), squares, rectangles, triangles, ovals, American footballshaped, and chevrons.

In some embodiments, liquid channels include wider sections (e.g., where the liquid is spread over a larger cross-sectional area to increase interactions between the liquid and features within the channel) and narrower sections (e.g., such as ducts to conduct liquid from point to point within the chromatograph column). A liquid channel can, for example, have a width between 1 µm and 75 µm, for example between 1 µm and 5 µm, 5 µm and 10 µm, 10 µm and 15 µm, 15 µm and 20 µm, 20 µm and 25 µm, 25 µm and 30 µm, 30 µm and 35 µm, 35 µm and 40 µm, 40 µm and 45 µm, 45 µm and 50 µm, 50 µm and 55 µm, 55 µm and 60 µm, 60 µm and 65 µm, 65 µm and 70 µm, 70 µm and 75 µm. In some embodiments, the liquid channel has a width in a range from 50 µm to 5 cm such as between 50 µm and 200 µm, between 200 µm and 500 µm, between 500 µm and 1 cm, or between 1 cm and 5 cm.

Channels can, for example, have a depth in a range of between 1 µm and 750 µm, such as between 1 µm and 5 µm, 5 µm and 10 µm, 10 µm and 15 µm, 15 µm and 20 µm, 20 µm and 50 µm, 50 µm and 75 µm, 75 µm and 100 µm, 100 µm and 150 µm, 150 µm and 200 µm, 200 µm and 250 µm, 250 µm and 300 µm, 300 µm and 500 µm, and 500 µm and 750 µm. In some embodiments, the depth of the channel can be less than half of the thickness of the substrate to ensure that the substrate remains thick enough to provide mechanical strength and a solid foundation for the microfabricated structures (e.g., pillars). In some embodiments, the thickness of the wafer is about 500 µm. The pillars can have a typical diameter of between 500 nm and 3 mm, for example between 500 nm and 100 µm. The inter-pillar distance between adjacent pillar structures can be less than 10 micrometers, for example less than 5 micrometers. In some embodiments, pillars can have sloped side walls, and the slope of the side walls of the pillar structures be less than 2°, for example smaller than 1°, such as, for example, less than 0.5°. In some embodiments, the pillars are vertical.

A portion of the surface of the stationary phase substrate can be attached to a linker, and the linker can be attached to a polymer. The linker is formed upon reaction of a grafted pre-linker with a monomer of the polymer. Examples of the pre-linker are acrylate silanes, such as alkylacryloxypropyltrialkoxysilane, or analogues containing a terminal alkene. In some embodiments, the pre-linker comprises 3-methacryloxypropyltrimethoxysilane, 3-methacryloxypropyltriethoxysilane, 3-methacryloxypropyl trisdimethylaminosilane, allyltrimethoxysilane, 5-hexenyltrimethoxysilane, vinyltrimethoxysilane, or mixtures thereof. In some embodiments, the pre-linker comprises 3-methacryloxypropyltrimethoxysilane.

Formula 1 below provides an exemplary, non-limiting linker and polymer: 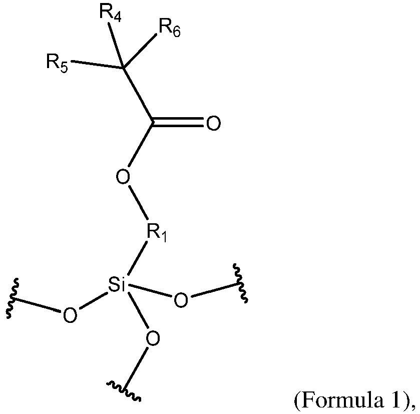 wherein R₁ and R₄ are independently alkyl groups, and R₅ and R₆ are polymer. In some embodiments, R₁ and R₄ are independently C₁₋₄ alkyl, such as methyl, ethyl, propyl, or butyl. In some embodiments, R₁ is butyl. In some embodiments, R₄ is methyl. In some embodiments, R₅ and R₆ are polyacrylamide. In some embodiments the polyacrylamide is formed from monomers comprising acrylamide, N,N-dimethylacrylamide, or N,N-diethylacrylamide.

An example embodiment of Formula 1 is the following:

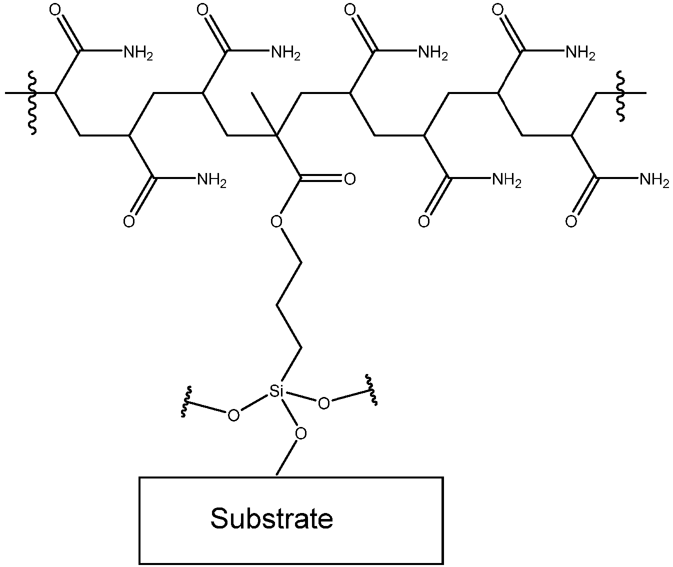

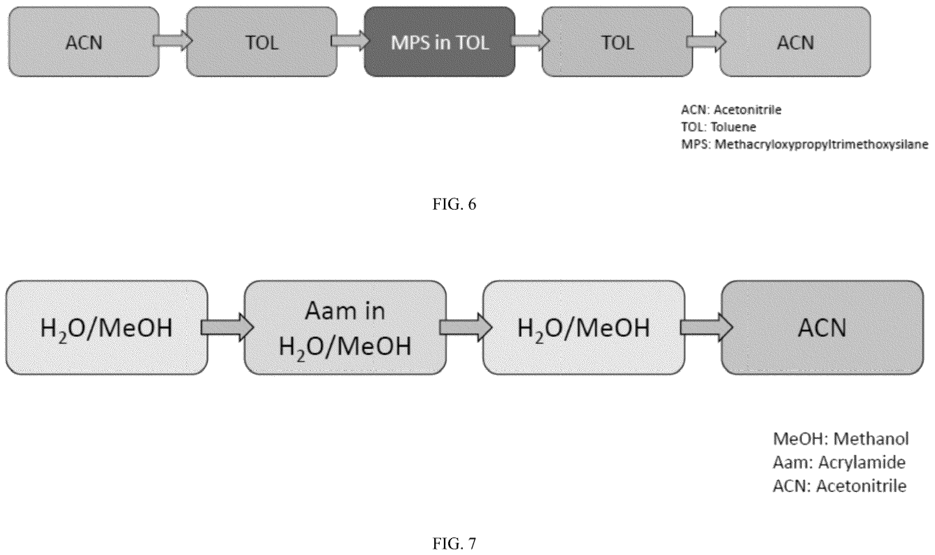

A chromatography column can be functionalized by placing a linker and forming a polymer. Linker placement can comprise flowing a first mixture comprising an acrylate silane, an acid catalyst, and a first solvent through the column so as to place a pre-linker on the stationary phase substrate of the chromatography column. This pre-linker is formed into the linker upon the formation of the polymer. FIG. 6 is a schematic of an embodiment of the linker placement step.

The polymer can be formed by flowing a second mixture comprising a monomer, a second solvent, and a radical initiator through the chromatography column under conditions sufficient to react the monomer with the pre-linker to form a polymer attached to a linker.

In some embodiments, the solvent used in the linker placement reaction (first solvent) is a hydrophobic solvent, which is able to dissolve the acrylate silane. Examples of hydrophobic solvents include toluene, hexane, and xylene.

In the linker placement reaction, an organic acid catalyst can be used to catalyze the coupling of the acrylate silane to the silica surface to form the pre-linker. The acid catalyst can include, for example, any one or more of acetic acid, formic acid, lactic acid, and citric acid.

In an example linker placement reaction, an acrylate silane bonds to the silica surface of the stationary phase substrate to form the pre-linker. Example, non-limiting acrylate silanes or analogues with a terminal alkene include 3-methacryloxypropyltrimethoxysilane, 3-methacryloxypropyltriethoxysilane, 3-methacryloxypropyl trisdimethylaminosilane, allyltrimethoxysilane, 5-hexenyltrimethoxysilane, vinyltrimethoxysilane, or mixtures thereof.

In some embodiments, the temperature of the linker placement reaction is from about 50 °C to about 95 °C, or from about 50 °C to about 150 °C. Without being bound to any particular theory or embodiment, temperature can have an effect on the yield of the linker placement and can result in a higher yield at a higher temperature. In some embodiments, the temperature of the linker placement reaction can be selected based upon consideration of boiling points of reagents or solvents and/or based on the fluidic pressure applied to the solution to flow through the microfabricated chromatography column.

An example pre-linker placement reaction is:

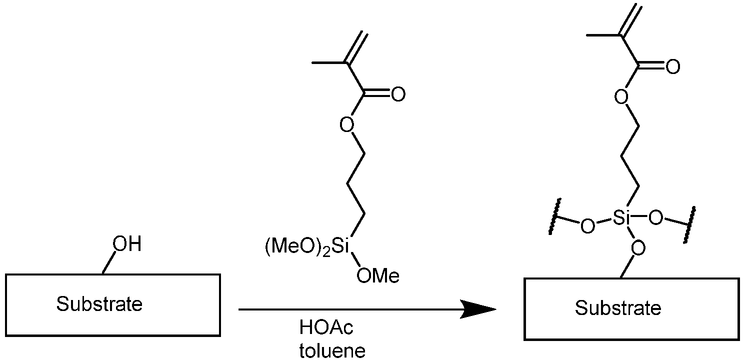

As shown, polymer formation creates a polymer attached to the linker. In some embodiments, the polymer provides hydrophilic interactions so the microfluidic device can be used for hydrophilic interaction chromatography. In some embodiments, the monomer is an acrylamide or N-vinylacetamide. Examples of monomers include acrylamide, N,N-dimethylacrylamide, or N,N-diethylacrylamide. In some embodiments, the monomer comprises acrylamide. In some embodiments, the monomer comprises N-vinylacetamide. The monomer may be in a concentration between 0.01M and 1M, such as between 0.01M and 0.05M, 0.05M and 0.1M, 0.1M and 0.2M, 0.2M and 0.3M, 0.3M and 0.4M, 0.4M and 0.5M, 0.5M and 0.6M, 0.6M and 0.7M, 0.7M and 0.8M, 0.8M and 0.9M, and 0.9M and 1.0M. The concentration of the monomer may be altered due to the concentration of the initiator, the temperature, flow rate, and other parameters. FIG. 7 is a schematic of an embodiment of the polymer formation step.

In some embodiments, the solvent used in the polymer formation reaction (second solvent) is a hydrophilic solvent. Example hydrophilic solvents include methanol and water mixtures.

The combination of the solvent and catalyst has an effect on the grafting reaction of the pre-linker, such as 3-methacryloxypropyltrimethoxysilane (MPS), onto the silica surface. With different solvents and catalysts the yield and density can be increased or decreased. In some embodiments, toluene is the solvent and acetic acid is the catalyst, which resulted in higher grafting yields compared to other solvent/ catalyst systems, such as DMF/pyridine. It is hypothesized that the hydrophobic nature of toluene drives the hydrophilic alkoxy tails of MPS organosilane towards the silica surface, where the present acetic acid (also hydrophilic) dissociates and catalyzes the reaction towards covalent grafting.

The radical initiator starts the polymerization reaction. Examples of radical initiators include potassium persulfate, ammonium persulfate, tert-butyl hydroperoxide, and azobisisobutyronitrile (AIBN). In some embodiments, the radical initiator is selected from potassium persulfate or ammonium persulfate. These persulfate initiators may be controlled by their temperature sensitivity. At room temperature and at neutral pH levels, there is no generation of primary free radicals and therefore no monomer conversion occurring. This helps to prevent unwanted polymerization in the reagent vessel that supplies flow to the chromatographic columns. Monomer conversion can be confined to the column by only heating the column. Without being bound to any particular theory or embodiment, the amount of radical initiator present in the second mixture has an effect upon the yield, rate, and size of polymers that are produced. In some embodiments, the second mixture comprises about 2 mol. % to an about 10 mol. % initiator compared to monomer, such as 2 to 3 mol. %, 3 to 4 mol. %, 4 to 5 mol. %, 5 to 6 mol. %, 6 to 7 mol. %, 7 to 8 mol. %, 8 to 9 mol. %, 9 to 10 mol. %, and 3 to 5 mol. %.

Experiments were conducted using ratios of monomer:initiator (such as acrylamide:potassium persulfate) to target a polymerization with a high degree of initiation, but also termination. Ratios that were too high or too low can result in clogged microfluidic channels or an insufficient amount of polymer formation and poor chromatographic separation. Example molar ratios of monomer:initiator are 0.01:1 to 0.1:1, such as 0.01:1 to 0.02:1, 0.02:1 to 0.03:1, 0.03:1 to 0.04:1, 0.04:1 to 0.05:1, 0.05:1 to 0.06:1, 0.06:1 to 0.07:1, 0.07:1 to 0.08:1, 0.08:1 to 0.09:1, and 0.09:1 to 0.1:1.

The first and second mixtures can be flowed through the chromatography column sequentially, with an intermittent flushing step for a proper transition from the first solvent to the second solvent. The flowing through the column allows fresh reagent to react at the sites on the stationary phase substrate and the pre-linker for the first and second mixtures, respectively. In some embodiments, the first mixture can be flowed at a flow velocity of from about 0.5 mm/s to about 10 mm/s. In some embodiments, the second mixture can be flowed at a flow velocity of from about 1 mm/s to about 7 mm/s. In some embodiments, a solvent or solvent mixture is flushed through the chromatography column prior to and after the first and second mixtures are flowed through the chromatography column. An example solvent that may be used to flush the chromatography column is acetonitrile and mixtures of acetonitrile with solvents used for the reactions.

An example polymer formation reaction is:

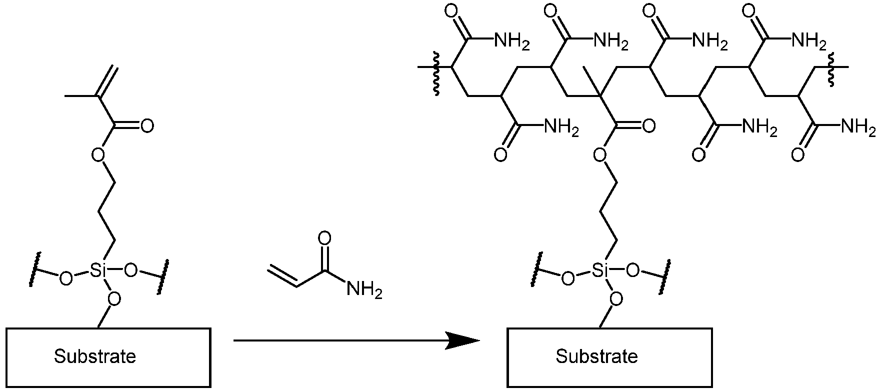

In the present disclosure the singular forms "a", "an" and "the" include the plural reference, and reference to a particular numerical value includes at least that particular value, unless the context clearly indicates otherwise. Thus, for example, a reference to "a material" is a reference to at least one of such materials and equivalents thereof known to those skilled in the art, and so forth.

The modifier "about" should be considered as disclosing the range defined by the absolute values of the two endpoints. For example, the expression "from about 2 to about 4" also discloses the range "from 2 to 4." When used to modify a single number, the term "about" can refer to plus or minus 10% of the indicated number and includes the indicated number. For example, "about 10%" can indicate a range of 9% to 11%, and "about 1 " means from 0.9 to 1.1.

When a list is presented, unless stated otherwise, it is to be understood that each individual element of that list and every combination of that list is to be interpreted as a separate embodiment. For example, a list of embodiments presented as "A, B, or C" is to be interpreted as including the embodiments, "A," "B," "C," "A or B," "A or C," "B or C," or "A, B, or C."

Where present, all ranges are inclusive and combinable. That is, references to values stated in ranges include every value within that range. For example, a range defined as from 400 to 450 ppm includes 400 ppm and 450 ppm as independent embodiments. Ranges of 400 to 450 ppm and 450 to 500 ppm can be combined to be a range of 400 to 500 ppm.

It is to be appreciated that certain features of the invention which are, for clarity, described herein in the context of separate embodiments, may also be provided in combination in a single embodiment. That is, unless obviously incompatible or excluded, each individual embodiment is deemed to be combinable with any other embodiments and such a combination is considered to be another embodiment. Conversely, various features of the invention that are, for brevity, described in the context of a single embodiment, may also be provided separately or in any sub-combination. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation. Finally, while an embodiment may be described as part of a series of steps or part of a more general structure, each said step may also be considered an independent embodiment in itself.

While the present disclosure has illustrated by description several embodiments and while the illustrative embodiments are described in considerable detail, it is not the intention of the applicant to restrict or in any way limit the scope of the appended claims to such detail. Additional advantages and modifications may readily appear to those skilled in the art. Furthermore, features from separate lists can be combined; and features from the examples can be generalized to the whole disclosure.

### EXAMPLES

### Evaluation Procedure

The HILIC stationary phase characteristics were tested using the so called "Tanaka test probes," as described in Tanaka et al., Journal of Chromatography A, 1218 (2011) 5903-5919. In these methods, the selectivity (α) of different sets of components is used to probe the chemical characteristics of the stationary phase. Selectivities are expressed as the quotient of two retention factors, e.g., e.g., αOH = k'(U)/k'(2'-dU)). The standard experimental conditions were:

| | |
|---|---|
| • Equipment: | Ultimate 3000 w/ 4nl injection valve |
| • Mobile Phase: | Acetonitrile - 90 vol.% |
| | Water w/ 20 mM NH₄OAc (pH aq.: 4.7) - 10 vol.% |
| • Gradient: | isocratic |
| • Flow rate: | 250 nl/min |
| • Temp: | 30°C |
| • Detection: | UV 260nm |
| • Void marker: | Toluene |

### Example 1

A 'pristine' microfluidic chromatography column (e.g., µPAC^{™} high pressure liquid chromatography column from Thermo Fisher Scientific, Inc., Waltham, MA) comprises a microfluidic column with chosen architecture which is fixated, at the inlet and outlet, with fused silica capillaries of chosen dimensions (length, internal/external diameter). The microfluidic chromatography column starting surface can be porous or non-porous, and it can be oxidized to various extents, as a result of prior processing parameters.

The pristine microfluidic chromatography column was connected on one end, through its capillary, to a liquid displacement device, either singular or in parallel with additional columns making use of flow splitting manifolds. This displacement device can be any of the following, but not limited to pistons pumps and/or pressure driven flow devices. The connection points can be fittings of any desired type and material, as long as they provide a leak-free fixation to the setup. All used materials are to be chemically resistant to the used chemicals in the grafting protocol.

The microfluidic chromatography column was placed on or in a heating device, which can be any of the following, but not limited to heating plates, heating chambers, which are thermostatically regulated. An individual microfluidic chromatography column can be fixated in a dedicated casing of any desired design and material, and its capillaries can be sleeved with any material of choice for increased robustness. Thermally conductive materials, such as pads, can be present in the microfluidic chromatography column encasement for optimal heat transfer between encasement and column.

The capillary serving as outlet was arranged in a way where an effluent was collected during the grafting protocol, such as via connection to a collection recipient (vial, flask...). This serves mainly as a control action. In some cases, the outlet capillary was connected to an additional capillary of a certain length and internal/external diameter, which can serve as flow restrictor.

Upon proper connection of one or multiple columns to the setup, the column was heated to the desired temperature and the first sequence of grafting/rinsing steps was initiated.

The following grafting protocol was used for the first stage of microfluidic chromatography column functionalization, i.e., the deposition of an acrylate-type silane onto the surface:
(1) The column was initially 'wetted' by flowing pure acetonitrile ("ACN") through. The liquid displacement device provides a flow of ACN at a chosen flowrate and/or pressure, depending on the column architecture. There is no strict time window as to the duration of this rinsing step, as it purely serves as a wetting stage. It was typically performed at least one hour in order to also monitor the leak tightness of the setup and its various connection points.
(2) The column was now flushed with pure toluene ("TOL") in order to prepare it for the subsequent grafting step. This so-called 'solvent switch' was accompanied by the proper priming procedures of the liquid displacement devices and fluidic pathways leading towards the columns. TOL was then flowed through the column at a chosen flowrate and/or pressure, depending on the column architecture. Flushing times are typically dictated by the design and column volume of a specific column architecture. A typical TOL flushing sequence took place between 1 and 24 hours.
(3) In a next step, a grafting solution was flowed through the column at chosen flowrate and/or pressure to obtain the desired flow velocity. A toluene-based solution was prepared containing a desired acrylate organosilane and organic acid catalyst in chosen molecular ratios. A typical example comprises a solution of 5 % (v/v) 3-methacryloxypropyltrimethoxysilane and 1 % (v/v) glacial acetic acid in toluene. The grafting step took place for a chosen duration within a time frame of 2 hours to over 48 hours. Typically, a contact time between 24 and 48 hours was chosen for maximum grafting yield (depending on column architecture).
(4) After grafting, the column was again flushed with pure TOL in order to remove any unreacted reagent from the column surface. The column was flushed at a chosen flowrate and/or pressure, depending on the column architecture. Flushing times are typically dictated by the design and column volume of a specific column architecture. A typical TOL flushing step took place between 1 and 24 hours.
(5) The final flushing step of this grafting sequence was performed with ACN, analogue to the initial wetting step. The ACN displaces the hydrophobic TOL, which serves as a preparation for a subsequent flushing step with hydrophilic solvents. The column was flushed at a chosen flowrate and/or pressure, depending on the column architecture. Flushing times are typically dictated by the design and column volume of a specific column architecture. A typical ACN flushing step took place between 1 and 24 hours.

The alkene-functionalized microfluidic chromatography column, as obtained in the first grafting phase, was subjected to the second and final grafting sequence, where a suitable amidic monomer was polymerized *in-situ* and immobilized onto the surface, making use of the available alkene functionalities on the surface. Before this sequence was initiated, the temperature was adjusted to desired values.
(1) The column was flushed with a methanol/water mixture of chosen composition to prepare it for the subsequent grafting step. The solvent was flowed through the column at a chosen flowrate and/or pressure, depending on the column architecture. Flushing times are typically dictated by the design and column volume of a specific column architecture. A typical solvent flushing sequence took place between 1 and 24 hours.
(2) For the subsequent grafting step, a solution was prepared comprising a suitable alkene-containing amide monomer and a radical initiator, dissolved in a methanol/water mixture at chosen molecular ratios. A typical example comprises a solution of 0.2 M acrylamide and 0.006 M potassium persulfate in 50/50 (v/v) methanol/water, obtaining a molar ratio of 1:0.03 of monomer:initiator. The solution was flowed through the columns at a chosen flowrate and/or pressure, depending on the column architecture, to obtain the desired linear velocity. The grafting step took place for a chosen duration within a time frame of 2 hours to over 48 hours. Typically, a contact time between 24 and 48 hours was chosen for optimal grafting yield (depending on column architecture and process parameters).
(3) The column was subsequently flushed with a methanol/water mixture of chosen composition to remove any unreacted reagents from the column surface. The solvent was flowed through the columns at a chosen flowrate and/or pressure, depending on the column architecture. Flushing times were typically dictated by the design and column volume of a specific column architecture. A typical solvent flushing sequence took place between 1 and 24 hours.
(4) A final flushing step took place in pure ACN at a chosen flowrate and/or pressure, depending on the column architecture. This step is optional as it serves to prepare the column for chromatographic evaluation in HILIC mode, which predominantly makes use of ACN/Water mixtures as mobile phase. Flushing times were typically dictated by the design and column volume of a specific architecture. A typical solvent flushing sequence took place between 1 and 24 hours.

### Example 2 - Hydrophilic Capacity

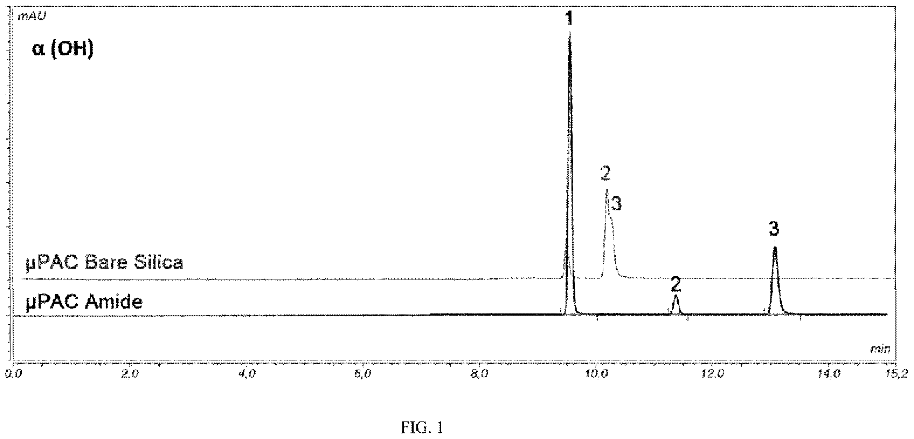

The selectivity of uridine and 2'-deoxyuridine is indicative of the hydrophilic capacity/nature of the column. A HILIC column of Example 1 was compared to an unfunctionalized column as shown in FIG. 1 using the Evaluation Procedure. Not only does the amide functionalized column display a higher retention for these nucleosides, compared to the bare silica column, also the selectivity between them corresponds well to what is typically observed for neutral amide phases.

### Example 3 - Hydrophobic Capacity

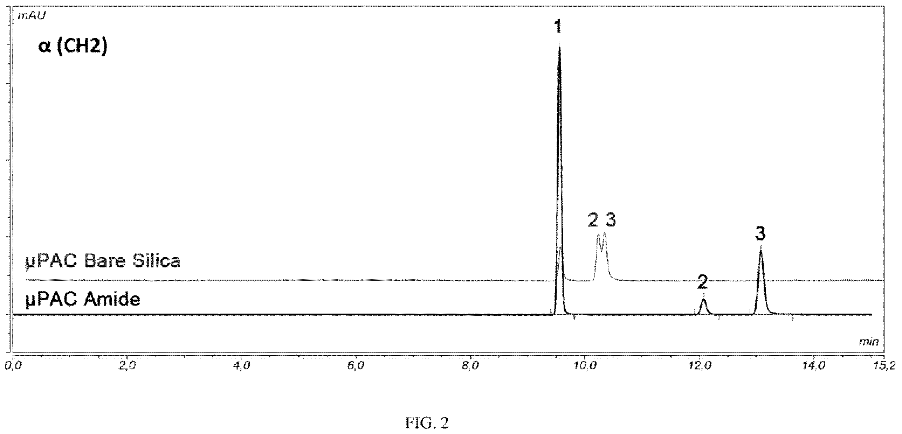

The selectivity of uridine and 5-methyluridine is indicative of the hydrophobic capacity/nature of the column. A HILIC column of Example 1 was compared to an unfunctionalized column as shown in FIG. 2 using the Evaluation Procedure. Once again, the difference in retention between both columns is notable, as is the selectivity between the nucleoside probes.

### Example 4 - Anion Selectivity

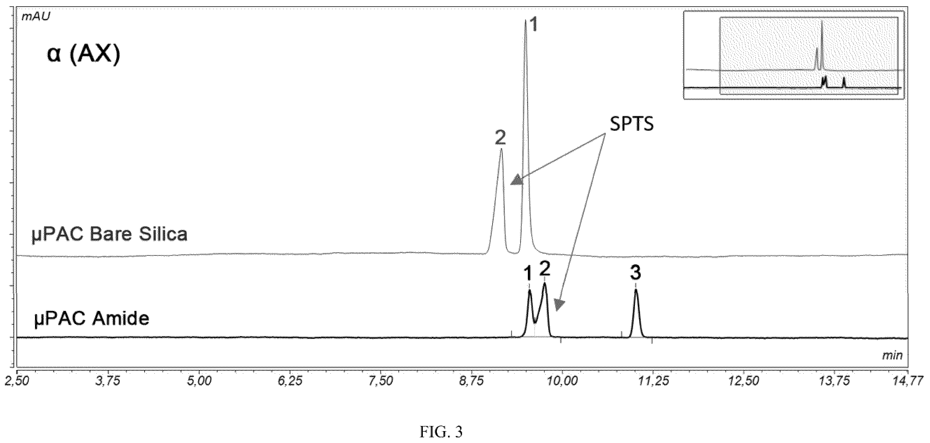

The selectivity of sodium p-toluene sulfonate (SPTS) is indicative of the anion selectivity capacity/nature of the column. A HILIC column of Example 1 was compared to an unfunctionalized column as shown in FIG. 3 using the Evaluation Procedure. Positive retention times were observed on the functionalized columns while negative retention times were observed on the unfunctionalized column. This can be explained by the grafting process, which functionalizes the silanolic surface as well as shields residual silanols with a polymeric amide phase. This largely nullifies the electrostatic repulsion with anionic probes such as SPTS. An unfunctionalized column with accessible silanols does, however, display this repelling behaviour causing the anionic probe to elute before the neutral void marker.

### Example 5 - Cation Selecitivy

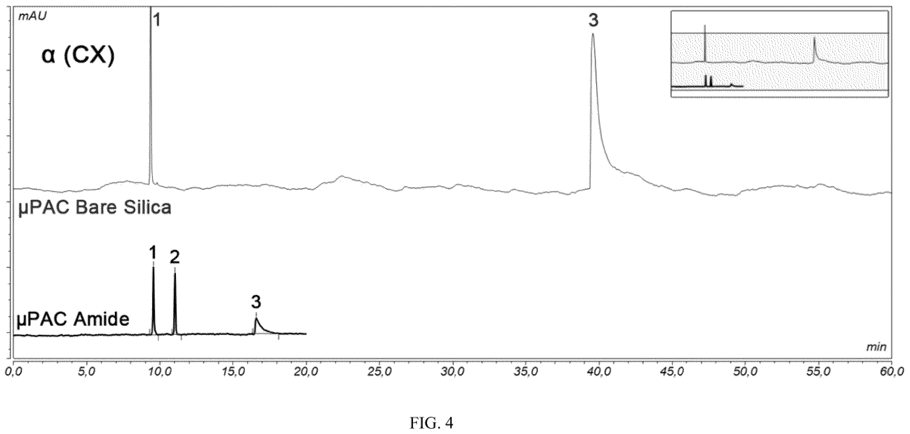

The selectivity of trimethylphenyl ammonium chloride (TMPAC) is indicative of the cation selectivity capacity/nature of the column. The HILIC column of Example 1 was compared to an unfunctionalized column as shown in FIG. 4 using the Evaluation Procedure. Shorter retention times were observed on the functionalized columns while longer retention times were observed on the unfunctionalized column. This is again due to the ionic interaction behaviour, where a functionalized column shows less retention towards cationic probes such as TMPAC, while an unfunctionalized silanolic surface displays a strong electrostatic attraction towards such probes.

### Example 6 - Acid-Base Selectivity

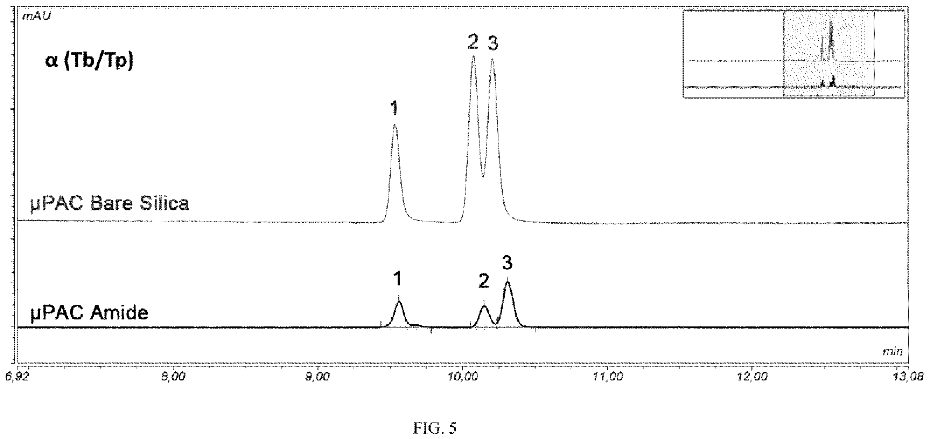

The selectivity of theophylline (Tp) and theobromine (Tb) is indicative of the acid-base capacity/nature of the column. The HILIC column of Example 1 was compared to an unfunctionalized column as shown in FIG. 5 using the Evaluation Procedure. Basic stationary phases give an α(Tb/Tp) <1, while neutral phases give an α(Tb/Tp) = 1, and acidic phases α(Tb/Tp)>1. Despite being a neutral phase, amidic columns often behave as acidic columns, leading to α(Tb/Tp) values of > 1, due to the acidic (and cation exchange) nature of their carboxylic-like moieties. (Journal of Chromatography A, 1218 (2011) 5903- 5919).

Various embodiments of the columns and methods taught herein may be described by one or more of the following clauses.

Clause 1. A method of functionalizing a chromatography column, comprising: a linker placement, comprising flowing a first mixture comprising an acrylate silane, an acid catalyst, and a first solvent through the column so as to place a pre-linker on the stationary phase substrate of the chromatography column; and a polymer formation, comprising flowing a second mixture comprising a monomer, a second solvent, and a radical initiator through the chromatography column under conditions sufficient to react the monomer with the pre-linker to form a polymer attached to a linker.

Clause 2. The method of clause 1, wherein the substrate comprises pillars comprising silicon oxide.

Clause 3. The method of any one of clauses 1-2, wherein the first solvent is a hydrophobic solvent.

Clause 4. The method of any one of clauses 1-3, wherein the acid catalyst comprises any one or more of acetic acid, formic acid, lactic acid, and citric acid.

Clause 5. The method of any one of clauses 1-4, wherein the acrylate silane comprises 3-methacryloxypropyltrimethoxysilane, 3-methacryloxypropyltriethoxysilane, 3-methacryloxypropyl trisdimethylaminosilane, allyltrimethoxysilane, 5-hexenyltrimethoxysilane, vinyltrimethoxysilane, or mixtures thereof.

Clause 6. The method of any one of clauses 1-5, wherein the linker placement is performed at a temperature of from about 50 °C to about 150 °C.

Clause 7. The method of any one of clauses 1-6, wherein the second mixture has an initiator: monomer molar ratio of 0.01:1 to 0.1:1.

Clause 8. The method of any one of clauses 1-7, wherein the second solvent is a hydrophilic solvent.

Clause 9. The method of any one of clauses 1-8, wherein the monomer comprises an acrylamide or an N-vinylacetamide.

Clause 10. The method of any one of clauses 1-9, wherein the monomer is acrylamide.

Clause 11. The method of any one of clauses 1-10, wherein the radical initiator comprises potassium persulfate.

Clause 12. The method of any one of clauses 1-11, wherein the second mixture is flowed at a flow velocity of from about 1 mm/s to about 7 mm/s.

Clause 13. The method of any one of clauses 1-12, wherein the chromatography column is a microfluidic device.

Clause 14. A chromatography column, wherein the chromatography column is a microfluidic device comprising: a stationary phase substrate having a liquid channel defined by channel walls, the channel having an inlet and an outlet; and pillars positioned in the channel on the substrate, wherein at least a portion of the surface of the stationary phase substrate is attached to a linker, and the linker is attached to a polymer.

Clause 15. The chromatography column of clause 14, wherein the stationary phase substrate of the chromatography column comprises silicon oxide.

Clause 16. The chromatography column of any one of clauses 14-15, wherein the linker is a reaction product of a pre-linker with a monomer of the polymer.

Clause 17. The chromatography column of clause 16, wherein the pre-linker is an acrylate silane.

Clause 18. The chromatography column of clause 17, wherein the linker is formed from alkylacryloxypropyltrialkoxysilane.

Clause 19. The chromatography column of any one of clauses 15-18, wherein the linker and polymer are represented by Formula 1: 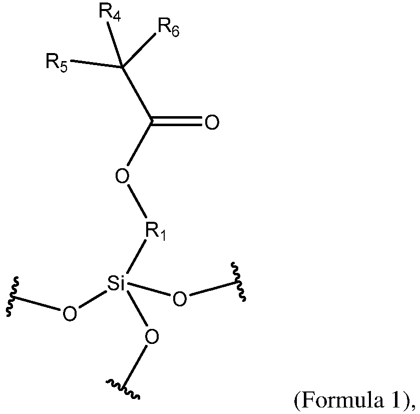 wherein R₁ and R₄ are independently alkyl groups, and R₅ and R₆ are polymer.

Clause 20. The chromatography column of clause 19, wherein R₅ and R₆ are polyacrylamide.

Clause 21. The chromatography column of clause 19, wherein the polyacrylamide is formed from monomers comprising acrylamide, N,N-dimethylacrylamide, or N,N-diethylacrylamide.

## Claims

1. A method of functionalizing a chromatography column, comprising:
a linker placement, comprising flowing a first mixture comprising an acrylate silane, an acid catalyst, and a first solvent through the column so as to place a pre-linker on the stationary phase substrate of the chromatography column; and
a polymer formation, comprising flowing a second mixture comprising a monomer, a second solvent, and a radical initiator through the chromatography column under conditions sufficient to react the monomer with the pre-linker to form a polymer attached to a linker.

2. The method of claim 1, wherein the substrate comprises pillars comprising silicon oxide.

3. The method of any one of claims 1-2, wherein the first solvent is a hydrophobic solvent; and/or wherein the acid catalyst comprises any one or more of acetic acid, formic acid, lactic acid, and citric acid.

4. The method of any one of claims 1-3, wherein the acrylate silane comprises 3-methacryloxypropyltrimethoxysilane, 3-methacryloxypropyltriethoxysilane, 3-methacryloxypropyl trisdimethylaminosilane, allyltrimethoxysilane, 5-hexenyltrimethoxysilane, vinyltrimethoxysilane, or mixtures thereof.

5. The method of any one of claims 1-4, wherein the linker placement is performed at a temperature of from about 50 °C to about 150 °C.

6. The method of any one of claims 1-5, wherein the second mixture has an initiator:monomer molar ratio of 0.01:1 to 0.1:1.

7. The method of any one of claims 1-6, wherein the second solvent is a hydrophilic solvent.

8. The method of any one of claims 1-7, wherein the monomer comprises an acrylamide or an N-vinylacetamide or, optionally, wherein the monomer is acrylamide.

9. The method of any one of claims 1-8, wherein the radical initiator comprises potassium persulfate.

10. The method of any one of claims 1-9, wherein the second mixture is flowed at a flow velocity of from about 1 mm/s to about 7 mm/s.

11. The method of any one of claims 1-10, wherein the chromatography column is a microfluidic device.

12. A chromatography column, wherein the chromatography column is a microfluidic device comprising:
a stationary phase substrate having a liquid channel defined by channel walls, the channel having an inlet and an outlet; and
pillars positioned in the channel on the substrate,
wherein at least a portion of the surface of the stationary phase substrate is attached to a linker, and the linker is attached to a polymer.

13. The chromatography column of claim 12, wherein the stationary phase substrate of the chromatography column comprises silicon oxide.

14. The chromatography column of any one of claims 12-13, wherein the linker is a reaction product of a pre-linker with a monomer of the polymer; and optionally
wherein the pre-linker is an acrylate silane; and further optionally
wherein the linker is formed from alkylacryloxypropyltrialkoxysilane.

15. The chromatography column of any one of claims 13-14, wherein the linker and polymer are represented by Formula 1: 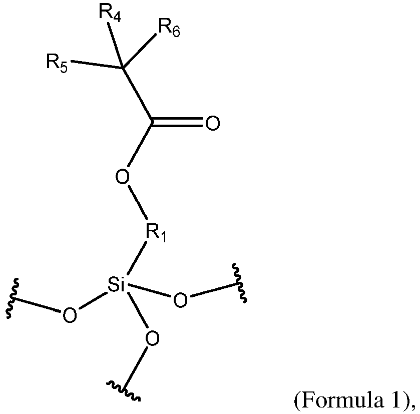
wherein R₁ and R₄ are independently alkyl groups, and R₅ and R₆ are polymer; and optionally wherein either
R₅ and R₆ are polyacrylamide; or
the polyacrylamide is formed from monomers comprising acrylamide, N,N-dimethylacrylamide, or N,N-diethylacrylamide.
